# EUROPÄISCHE PATENTSCHRIFT

(11) **EP 3 977 762 B1**
(45) Veröffentlichungstag und Bekanntmachung des Hinweises auf die Patenterteilung: **28.01.2026**
(21) Anmeldenummer: 20703989.2
(22) Anmeldetag: 05.02.2020
(51) Int. Cl.: H04W 8/18

(54) **NUTZUNG EINES KOMMUNIKATIONSPROFILS DURCH MEHRERE MOBILE ENDGERÄTE**
USE OF A COMMUNICATION PROFILE BY A PLURALITY OF MOBILE TERMINALS
UTILISATION D'UN PROFIL DE COMMUNICATION PAR PLUSIEURS TERMINAUX MOBILES

(30) Priorität: 24.05.2019 DE 102019113967
(43) Veröffentlichungstag der Anmeldung: 06.04.2022
(73) Patentinhaber: Bayerische Motoren Werke Aktiengesellschaft, 80809 München (DE)
(72) Erfinder: NEUHAEUSER, Michael, 84427 Sankt Wolfgang (DE); MUELLER, Thomas, 81241 München (DE)
(86) Internationale Anmeldenummer: PCT/EP2020/052823
(87) Internationale Veröffentlichungsnummer: WO 2020/239273

(56) Entgegenhaltungen:
- US-A1- 2013 007 278
- US-A1- 2015 099 562
- US-A1- 2016 088 465

## Beschreibung

Die Erfindung betrifft die Nutzung mobiler Endgeräte. Insbesondere betrifft die Erfindung die Aktivierung und Deaktivierung von Kommunikationsprofilen in den mobilen Endgeräten.

Ein mobiles Endgerät benötigt zur Kommunikation in einem Mobilfunknetz ein Kommunikationsprofil, das in einem SIM (Subscriber Identity Module) im mobilen Endgerät gespeichert sein kann. In einer Ausführungsform kann das Kommunikationsprofil auch in eine eSIM heruntergeladen werden. Gelegentlich können mehrere mobile Endgeräte über das gleiche Kommunikationsprofil verfügen. Es kann sinnvoll sein, zu jedem Zeitpunkt nur einem der mobilen Endgeräte die Verwendung des Kommunikationsprofils zu gestatten.

Ein mobiles Endgerät kann ein Kommunikationsprofil aktivieren (enablen) oder deaktivieren (disablen). Nach einem Aktivieren kann das mobile Endgerät eine externe Stelle von der Aktivierung benachrichtigen. Sollte dort eine Aktivierung des Kommunikationsprofils durch ein anderes mobiles Endgerät bekannt sein, so kann es eine Deaktivierungsanforderung an das andere mobile Endgerät versenden.

Sollte eines der mobilen Endgeräte außerhalb einer Reichweite des Mobilfunknetzes gelangen, so kann diese Synchronisation durchbrochen werden und es können mehr als ein mobiles Endgerät oder gar kein mobiles Endgerät ein aktiviertes Kommunikationsprofil umfassen.

US 2015 / 0 099 562 A1 offenbart ein Verfahren nach dem Oberbegriff des Anspruchs 1. Bei diesem Verfahren empfängt ein mobiles Endgerät eine Deaktivierungsanforderung, worauf das mobile Endgerät das Kommunikationsprofil deaktiviert.

Nachteilig bei diesem Verfahren ist, dass für das mobile Endgerät nicht erkennbar ist, ob die empfangene Deaktivierungsanforderung eine aktuelle Deaktivierungsanforderung oder eine veraltete Deaktivierungsanforderung ist.

Die der vorliegenden Erfindung zu Grunde liegende Aufgabe besteht in der Angabe einer verbesserten Technik zur Abstimmung von mobilen Endgeräten und zur Sicherstellung einer nur einfachen Nutzung eines Kommunikationsprofils. Die verbesserte Technik soll insbesondere sicherstellen, dass in dem mobilen Endgerät ein irrtümliches Deaktivieren des Kommunikationsprofils, das durch überholte, d.h. verspätete und/oder veraltete Deaktivierungsanforderungen verursacht werden könnte, vermieden wird.

Die Erfindung löst die Aufgabe mittels der Gegenstände der unabhängigen Ansprüche 1, 9, 10 und 11. Unteransprüche geben bevorzugte Ausführungsformen wieder.

Nach einem ersten Aspekt der vorliegenden Erfindung umfasst ein erstes Verfahren zum Steuern eines mobilen Endgeräts Schritte
- des Aktivierens eines Kommunikationsprofils des mobilen Endgeräts durch das mobile Endgerät;
- des Übermittelns einer Benachrichtigung über die Aktivierung durch das mobile Endgerät an eine externe Stelle;
- des Hinterlegens eines Identifikators für die Aktivierung des Kommunikationsprofils;
- des Empfangens einer Deaktivierungsanforderung und eines Identifikators durch das mobile Endgerät sowie
- des Deaktivierens des Kommunikationsprofils durch das mobile Endgerät, falls der empfangene Identifikator dem hinterlegten Identifikator entspricht.

Durch Verwenden eines Identifikators kann sichergestellt sein, dass eine inzwischen überholte Deaktivierungsanforderung, die verspätet an das mobile Endgerät zugestellt wird, nicht ausgeführt wird. Ein irrtümliches Deaktivieren des Kommunikationsprofils in dem mobilen Endgerät kann vermieden werden. Ein Übergeben des aktivierten Profils von einem ersten auf ein zweites mobiles Endgerät kann so auch bei vorübergehender Nichterreichbarkeit eines der mobilen Endgeräte ohne manuelles Zutun, etwa durch einen Benutzer eines der mobilen Endgeräte, erfolgen.

In einer ersten Variante wird der Identifikator seitens des mobilen Endgeräts bestimmt und vom mobilen Endgerät an die externe Stelle übermittelt. Der Identifikator kann insbesondere zusammen mit der Benachrichtigung an die externe Stelle übermittelt werden. Dadurch kann eine Anzahl zwischen dem mobilen Endgerät und der externen Stelle zu übermittelnder Nachrichten gering sein.

In einer zweiten Variante wird der Identifikator seitens der externen Stelle bestimmt und an das mobile Endgerät übermittelt. Bevorzugt erfolgt die Übermittlung in Antwort auf die Benachrichtigung. Dabei kann die Bestimmung der Identifikation durch die externe Stelle durchgeführt werden, sodass eine verbesserte Kohärenz der Identifikation erzielt sein kann.

Ein Identifikator ist bevorzugt derart bestimmt, dass von zwei Identifikatoren bestimmt werden kann, welcher zuerst und welcher erst danach erzeugt wurde. Dazu kann der Identifikator eine Information aus einer vorbestimmten Sequenz umfassen, insbesondere eine laufende Nummer. Alternativ kann ein Identifikator auch eine Art Zeitstempel umfassen, der auf den Zeitpunkt der Aktivierung des Kommunikationsprofils hinweist.

Die Benachrichtigung kann eine Identifikation des mobilen Endgeräts umfassen. Dabei ist die externe Stelle bevorzugt dazu eingerichtet, die Deaktivierungsanforderung an das der Identifikation zugeordnete mobile Endgerät zu übermitteln. Die Identifikation kann durch das mobile Endgerät auch von einem umgebenden Gerät übernommen werden. Beispielsweise kann das mobile Endgerät an Bord eines Kraftfahrzeugs angebracht sein und die Identifikation kann eine Fahrzeug-Identifikationsnummer oder eine ähnliche, auf das Fahrzeug bezogene Identifikation umfassen.

Das mobile Endgerät kann bei initiativem Deaktivieren des Kommunikationsprofils eine Deaktivierungsanforderung mit dem Identifikator an die externe Stelle übermitteln. Beim Deaktivieren aufgrund einer Deaktivierungsanforderung kann hingegen keine entsprechende Nachricht versandt werden. Die externe Stelle ist bevorzugt dazu eingerichtet, einen dem empfangenen Identifikator entsprechenden, hinterlegten Identifikator zu löschen. Das initiative Deaktivieren kann beispielsweise durch Einschalten eines Flugzeug-Modus, manuell durch einen Benutzer, oder beim Abstellen eines umgebenden Geräts erfolgen. Durch das Übermitteln der Deaktivierungsanforderung kann seitens der externen Stelle verbessert verfolgt werden, durch welches mobile Endgerät das Kommunikationsprofil verwendet werden soll, und durch welches nicht.

Nach einem zweiten Aspekt der Erfindung gemäß Anspruch 9 umfasst ein mobiles Endgerät
- eine Kommunikationseinrichtung zur Kommunikation mit einer externen Stelle;
- eine Speichereinrichtung zur Hinterlegung eines Identifikators und
- eine Verarbeitungseinrichtung.

Dabei ist die Verarbeitungseinrichtung dazu eingerichtet,
- ein Kommunikationsprofil zu aktivieren;
- eine Benachrichtigung über die Aktivierung an eine externe Stelle zu übermitteln;
- einen Identifikator der Aktivierung zu hinterlegen;
- eine Deaktivierungsanforderung und einen Identifikator von der externen Stelle zu empfangen und
- das Kommunikationsprofil zu deaktivieren, falls der empfangene Identifikator dem hinterlegten Identifikator entspricht.

Die Verarbeitungseinrichtung kann dazu eingerichtet sein, ein hierin beschriebenes Verfahren, insbesondere das erste Verfahren, ganz oder teilweise auszuführen.

Nach einem dritten Aspekt der Erfindung gemäß Anspruch 10 umfasst ein Kraftfahrzeug ein hierin beschriebenes mobiles Endgerät.

Das erfindungsgemäße Verfahren kann zusätzlich auch zum Steuern einer externen Stelle dienen. Zu diesem Zweck kann das erfindungsgemäße Verfahren dahingehend weitergebildet werden, dass es zusätzliche, durch die externe Stelle auszuführende Verfahrensschritte umfasst, nämlich die Schritte
- des Empfangens, durch die externe Stelle, einer Benachrichtigung eines mobilen Endgeräts über dessen Aktivierung eines Kommunikationsprofils;
- des Hinterlegens eines der Aktivierung zugeordneten Identifikators;
- des Bestimmens, ob ein weiterer Identifikator einer Aktivierung des gleichen Kommunikationsprofils durch ein anderes mobiles Endgerät vorliegt, und in diesem Fall
- des Versendens einer Deaktivierungsanforderung und des weiteren Identifikators an das andere mobile Endgerät und des Löschens des versandten weiteren Identifikators.

Nach einem vierten Aspekt gemäß Anspruch 11 umfasst eine externe Stelle
- eine Kommunikationseinrichtung zur Kommunikation mit mehreren mobilen Endgeräten;
- eine Speichereinrichtung zur Hinterlegung von Identifikatoren eines oder mehrerer mobiler Endgeräte und
- eine Verarbeitungseinrichtung.

Dabei ist die Verarbeitungseinrichtung dazu eingerichtet,
- eine Benachrichtigung des ersten mobilen Endgeräts über eine Aktivierung eines Kommunikationsprofils zu empfangen;
- einen Identifikator der Aktivierung des Kommunikationsprofils zu hinterlegen;
- zu bestimmen, ob ein weiterer Identifikator einer Aktivierung des gleichen Kommunikationsprofils durch ein zweites mobiles Endgerät vorliegt, und in diesem Fall
- eine Deaktivierungsanforderung und den weiteren Identifikator an das zweite mobile Endgerät zu versenden und den versandten weiteren Identifikator zu löschen.

Die Verarbeitungseinrichtung ist erfindungsgemäß dazu eingerichtet, einen solchen weiteren Identifikator, der
- einen Zeitstempel, der auf den Zeitpunkt der Aktivierung des Kommunikationsprofils durch das zweite mobile Endgerät hinweist, oder
- eine laufende Nummer oder eine sonstige Information aus einer vorbestimmten Sequenz
umfasst, zu hinterlegen, an das zweite mobile Endgerät zu versenden und zu löschen.

Eine hierin beschriebene Verarbeitungseinrichtung kann einen programmierbaren Mikrocomputer oder Mikrocontroller umfassen und ein auf ihr ablauffähiges Verfahren kann in Form eines Computerprogrammprodukts mit Programmcodemitteln vorliegen. Das Computerprogrammprodukt kann auch auf einem computerlesbaren Datenträger abgespeichert sein. Hierin beschriebene Verfahren können miteinander verschränkt ausgeführt werden und hierin beschriebene Vorrichtungen können miteinander interagieren. Merkmale oder Vorteile können unter oder zwischen den Verfahren und Vorrichtungen übertragen werden.

Die Erfindung wird nun mit Bezug auf die beigefügten Zeichnungen genauer beschrieben, in denen:
- Figur 1: ein System und
- Figur 2: ein Ablaufdiagramm eines Verfahrens illustriert.

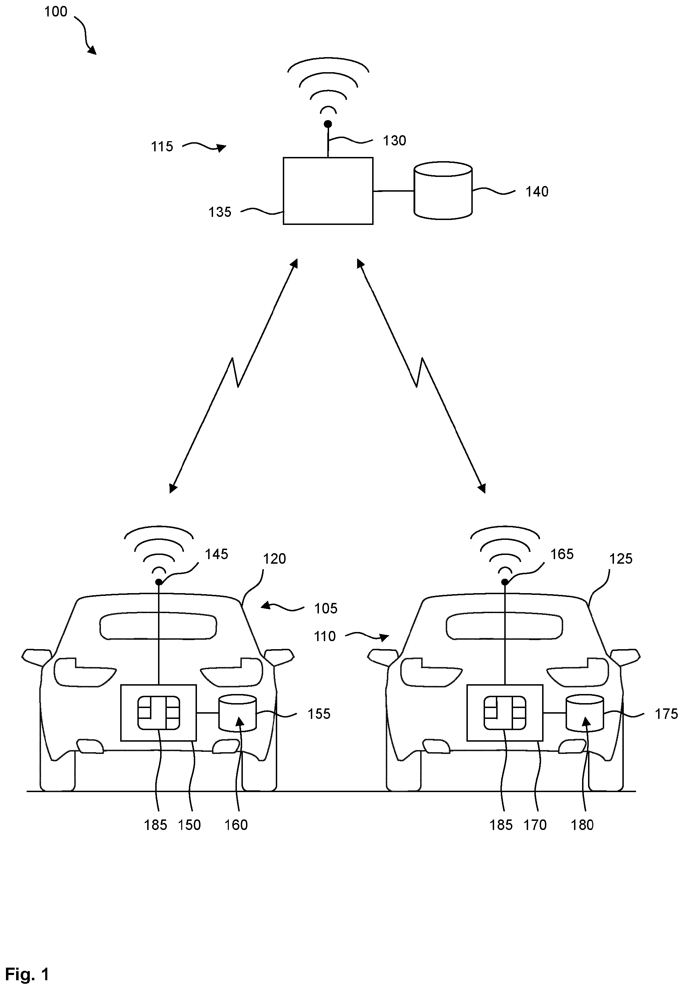

Figur 1 zeigt ein System 100, das ein erstes mobiles Endgerät 105, ein zweites mobiles Endgerät 110 und eine externe Stelle 115 umfasst. Optional sind auch mehr als zwei mobile Endgeräte 105, 110 möglich. Das erste mobile Endgerät 105 ist beispielhaft an Bord eines ersten Fahrzeugs 120 und das zweite mobile Endgerät 110 an Bord eines zweiten Fahrzeugs 125 angebracht. Die Fahrzeuge 120, 125 umfassen jeweils bevorzugt Kraftfahrzeuge, insbesondere Personenkraftwagen. Es ist zu verstehen, dass die mobilen Endgeräte 105, 110 in anderen Ausführungsformen jeweils auch eigenständig ausgeführt oder in eine beliebige andere Vorrichtung integriert ausgeführt sein können, beispielsweise in ein Smartphone, einen Tablet Computer oder einen Laptop Computer. Die Vorrichtung muss aus technischen Gründen nicht mobil sein.

Die externe Stelle 115 ist außerhalb der Fahrzeuge 120, 125 angebracht und üblicherweise als Server oder Dienst realisiert, insbesondere in einer Cloud. Die externe Stelle 115 kann einer vorbestimmten Anzahl mobiler Endgeräte 105, 110 zugeordnet sein. In einer Ausführungsform befindet sich die externe Stelle 115 in physikalischer Nähe zu den mobilen Endgeräten 105, 110. Die mobilen Endgeräte 105, 110 können beispielsweise Maschinen in einer Halle umfassen und die externe Stelle 115 kann im Bereich der Halle angebracht oder über eine Datenverbindung mit dieser verbunden sein. Die externe Stelle 115 umfasst bevorzugt eine Kommunikationseinrichtung 130, eine Verarbeitungseinrichtung 135 und eine Speichereinrichtung 140, insbesondere zur Hinterlegung von Identifikatoren.

Das erste mobile Endgerät 105 umfasst bevorzugt eine Kommunikationseinrichtung 145, eine Verarbeitungseinrichtung 150 und eine Speichereinrichtung 155 zur Ablage wenigstens eines Identifikators 160. Das zweite mobile Endgerät 110 umfasst bevorzugt eine Kommunikationseinrichtung 165, eine Verarbeitungseinrichtung 170 und eine Speichereinrichtung 175. Die Kommunikationseinrichtungen 145, 165 sind bevorzugt zur drahtlosen Kommunikation mit der Kommunikationseinrichtung 130 eingerichtet, insbesondere mittels eines Mobilfunknetzes. In einer weiteren Ausführungsform kann eines der mobilen Endgeräte 105, 110 auch eine Kommunikationseinrichtung 145, 165 zur Kommunikation mit der externen Stelle 115 und eine weitere zur Kommunikation über ein Mobilfunknetz umfassen. In den mobilen Endgeräten 105, 110 liegen einander entsprechende Kommunikationsprofile 185 zur Nutzung des Mobilfunknetzes vor, sodass beide mobilen Endgeräte 105, 110 beispielsweise unter der gleichen Mobilfunknummer erreichbar sein können.

Es besteht die Anforderung, dass zu jedem Zeitpunkt möglichst nur eines der mobilen Endgeräte 105, 110 das Kommunikationsprofil 185 verwenden soll. Jedes mobile Endgerät 105, 110 kann sein Kommunikationsprofil 185 aktivieren, um es zu verwenden, oder deaktivieren. In der Fachsprache werden für diese Vorgänge auch die Begriffe enablen und disablen verwendet.

Möchte ein mobiles Endgerät 105, 110 kommunizieren, so aktiviert es das Kommunikationsprofil 185 und sendet eine Benachrichtigung darüber an die externe Stelle 115. Soll die Kommunikation beendet werden, so kann das mobile Endgerät 105, 110 das Kommunikationsprofil 185 deaktivieren und eine entsprechende Benachrichtigung an die externe Stelle 115 senden.

Erkennt die externe Stelle 115, dass mehr als eine Aktivierung des Kommunikationsprofils 185 erfolgt ist, ohne dass eine Deaktivierung erfasst wurde, so kann sie eine Deaktivierungsanforderung an eines der mobilen Endgeräte 105, 110 senden. Üblicherweise wird die Anforderung an das mobile Endgerät 105, 110 gesandt, dessen Aktivierung am weitesten zeitlich zurück liegt.

Eine Deaktivierungsanforderung kann das mobile Endgerät 105, 110 aber nicht erreichen, wenn sich dieses außerhalb eines Bereichs des Mobilfunknetzes befindet. Beispielsweise kann das erste Fahrzeug 120 in eine Tiefgarage einfahren, während das Kommunikationsprofil 185 im ersten mobilen Endgerät 105 aktiv ist. Ein anderer Grund kann mangelnde Energie sein, etwa wenn ein lokaler Energiespeicher weitgehend oder ganz entleert ist. Aktiviert dann das zweite mobile Endgerät 110 das Kommunikationsprofil 185, so kann eine von der externen Stelle 115 versandte Deaktivierungsanforderung das erste mobile Endgerät 105 nicht erreichen. Die Deaktivierungsanforderung wird aber üblicherweise in eine Nachrichten-Warteschlange geschrieben, um sie später zuzustellen. Die eine Warteschlange kann an unterschiedlichen Orten in der Kommunikationskette vorgesehen sein und ist üblicherweise seitens der externen Einrichtung 115 oder eines der mobilen Endgeräte 105, 110 nicht manipulierbar.

In einer weiteren Ausführungsform ist die Warteschlange derart ausgeführt, dass eine Nachricht, insbesondere eine Deaktivierungsanforderung, nur eine vorbestimmte Lebensdauer hat, beispielsweise im Bereich von einigen Sekunden. Kann die Nachricht bis nach Ablauf ihrer Lebensdauer nicht an das mobile Endgerät 105, 110 zugestellt werden, so kann sie aus der Warteschlange gelöscht werden. Dazu kann die Warteschlange einen Zeitpunkt des Eintreffens einer neuen Nachricht und einen Hinweis auf die vorbestimmte Lebensdauer auswerten. Die Lebensdauer kann fest vorgegeben oder einer Nachricht individuell zugeordnet sein. Insbesondere kann die Lebensdauer Teil der Nachricht sein.

In der Zwischenzeit kann das zweite mobile Mobilgerät 110 jedoch das Kommunikationsprofil 185 seinerseits wieder deaktivieren. Die Deaktivierungsanforderung an das erste mobile Endgerät ist dadurch eigentlich veraltet und sollte nicht mehr ausgeführt werden. Wird das erste Fahrzeug 120 wieder verwendet, kann das Kommunikationsprofil 185 aktiviert werden. Eine entsprechende Nachricht an die externe Stelle 115 kann möglicherweise noch nicht zugestellt werden und kann in eine Warteschlange eingereiht werden. Sobald sich das erste Fahrzeug 120 wieder in Kommunikationsreichweite des Mobilfunknetzes begibt, wird die Deaktivierungsanforderung aus der Nachrichten-Warteschlange zugestellt und das erste mobile Endgerät 105 deaktiviert das Kommunikationsprofil 185 wieder. Ein Benutzer an Bord des ersten Fahrzeugs 120 kann dann nicht mehr erreichbar sein.

Es wird vorgeschlagen, einer Aktivierung einen Identifikator zuzuordnen und einer Deaktivierungsanforderung den Identifikator einer korrespondierenden Aktivierung beizufügen. Das mobile Endgerät 105, 110 kann dann überprüfen, ob der Identifikator einer erhaltenen Deaktivierungsanforderung einem Identifikator einer zuletzt durchgeführten Aktivierung entspricht. Ist dies der Fall, so kann das Kommunikationsprofil 185 deaktiviert werden. Andernfalls kann die Deaktivierungsanforderung ignoriert werden.

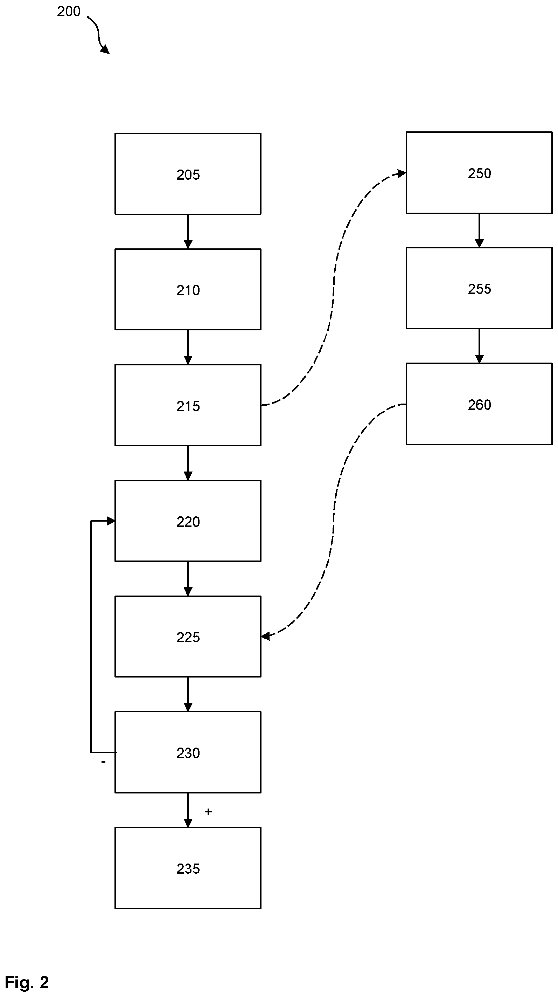

Figur 2 zeigt ein Ablaufdiagramm eines Verfahrens 200, das insbesondere im Zusammenhang mit dem System 100 ausgeführt werden kann. In einem linken Bereich sind Schritte dargestellt, die seitens eines der mobilen Endgeräte 105, 110 durchgeführt werden, vorliegend beispielhaft seitens des ersten mobilen Endgeräts 105. In einem rechten Bereich sind Schritte dargestellt, die seitens der externen Stelle 115 durchgeführt werden. Auf diese Weise können zwei getrennte Verfahren gebildet sein, die miteinander in Kontext stehen, wie im Folgenden genauer ausgeführt wird.

In einem Schritt 205 aktiviert das erste mobile Endgerät 105 das Kommunikationsprofil 185, beispielsweise weil ein umgebendes oder verbundenes Gerät, beispielsweise ein erstes Fahrzeug 120 in Betrieb genommen wird oder weil ein Benutzer das mobile Endgerät 105 entsprechend bedient. In einem Schritt 210 wird eine Identifikation 160 für die Aktivierung bestimmt und lokal hinterlegt. Die bestimmte Identifikation 160 unterscheidet sich zumindest von der zuletzt erzeugten Identifikation 160 und bevorzugt von möglichst vielen zurückliegend erzeugten Identifikatoren 160. Dazu kann der Identifikator 160 einer Sequenz folgen und ein neues Element der Sequenz verwendet werden. In einem einfachen Fall umfasst die Sequenz die natürlichen Zahlen, sodass ein neues Element durch Inkrementieren des letzten Elements erzeugt werden kann. In einem Schritt 215 wird eine Mitteilung über die Aktivierung und der bestimmte Identifikator 160 an die externe Stelle 115 übermittelt.

In einer anderen Ausführungsform kann im Schritt 215 auch die Mitteilung vom ersten mobilen Endgerät 105 an die externe Stelle 115 übermittelt werden, ohne dass zuvor seitens des ersten mobilen Endgeräts 105 der Identifikator bestimmt wurde. Dieser kann dann durch die externe Stelle 115 bestimmt und an das erste mobile Endgerät 105 zurück übermittelt und dort hinterlegt werden. In beiden beschriebenen Varianten liegt schließlich der Identifikator auf beiden Seiten 105, 115 vor.

In einem Schritt 220 kann das Kommunikationsprofil 185 durch das erste mobile Endgerät 105 verwendet werden, insbesondere aktiv durch Übertragen von Daten oder Gesprächsinformationen oder passiv durch Herstellen einer Erreichbarkeit des ersten mobilen Endgeräts 105. An dieser Stelle kann eine Verbindung der Kommunikationseinrichtung 145 des ersten mobilen Endgeräts 105 vorübergehend nicht verfügbar sein. In dieser Zeit kann das zweite mobile Endgerät 110 das Kommunikationsprofil 185 aktivieren, wozu es das gleiche Verfahren wie das erste mobile Endgerät 105 ausführen und eine entsprechende Nachricht an die externe Stelle 115 übermitteln kann. Diese kann mit einer Deaktivierungsanforderung an das erste mobile Endgerät 105 reagieren, wie unten noch genauer gezeigt wird.

In einem Schritt 225 kann das erste mobile Endgerät 105 eine Deaktivierungsanforderung von der externen Stelle 115 empfangen. Dieser ist der Identifikator 160 der Aktivierung beigefügt, die seitens der externen Stelle 115 zuletzt von diesem ersten mobilen Endgerät 105 empfangen wurde.

In einem Schritt 230 kann das erste mobile Endgerät 105 prüfen, ob der empfangene Identifikator 160 dem Identifikator 160 entspricht, der im Schritt 210 bestimmt beziehungsweise in Antwort auf den Schritt 215 empfangen und lokal hinterlegt wurde. Ist dies der Fall, so hat nach der Aktivierung des ersten mobilen Endgeräts 105 im Schritt 210 keine Aktivierung eines zweiten mobilen Endgeräts 110 stattgefunden, und die Deaktivierungsanforderung kann in einem Schritt 235 befolgt werden. Andernfalls, wenn die Identifikatoren 160 einander nicht entsprechen, kann die Deaktivierungsanforderung als veraltet bestimmt und verworfen oder ignoriert werden. Das erste mobile Endgerät 105 kann mit der Nutzung des Kommunikationsprofils 185 im Schritt 220 fortfahren.

Die externe Stelle 115 kann in einem Schritt 250 die Mitteilung des ersten mobilen Endgeräts 105 über eine Aktivierung erhalten. Der Mitteilung kann ein Identifikator 160 beigefügt sein, oder die externe Stelle 115 kann einen Identifikator 160 bestimmen und an das erste mobile Endgerät 105 zurück senden. Der Mitteilung des ersten mobilen Endgeräts 105 können noch weitere Informationen beigefügt sein, insbesondere ein Hinweis auf das erste mobile Endgerät 105 oder ein umgebendes oder verbundenes Gerät wie das erste Fahrzeug 120.

In einem Schritt 255 kann die externe Stelle 115 bestimmen, ob eine weitere Aktivierung des Kommunikationsprofils 185 aktiv ist. Dazu kann sie bestimmen, ob lokal ein Identifikator 160 einer Aktivierung des Kommunikationsprofils 185 vorliegt. Ist dies der Fall, so kann die externe Stelle 115 in einem Schritt 260 eine Deaktivierungsanforderung an dasjenige mobile Endgerät 105, 110 übermitteln, von dem die Aktivierungsnachricht stammte, deren Identifikator noch vorliegt. Sofern bestimmt wurde, dass ein weiterer Identifikator 180 einer Aktivierung des gleichen Kommunikationsprofils 185 durch ein zweites mobiles Endgerät 110 vorliegt, kann in diesem Fall die Deaktivierungsanforderung an das zweite mobile Endgerät 110 versandt werden, und der versandte weitere Identifikator 180 gelöscht werden. Zur Adressierung der Deaktivierungsanforderung an das richtige mobile Endgerät 105, 110 kann insbesondere ein bei einem zurückliegenden Durchlauf des Schritts 250 empfangener Hinweis auf das aktivierende mobile Endgerät 105, 110 ausgewertet werden. Der versandte Identifikator 180 kann gelöscht werden. Der vom ersten mobilen Endgerät 105 empfangene Identifikator 160 kann lokal hinterlegt werden.

Das Verfahren 200 kann in entsprechender Weise auch mit mehr als zwei mobilen Endgeräten 105, 110 durchgeführt werden.

### Bezugszeichen

- 100: System
- 105: erstes mobiles Endgerät
- 110: zweites mobiles Endgerät
- 115: externe Stelle
- 120: erstes Fahrzeug
- 125: zweites Fahrzeug

- 130: Kommunikationseinrichtung
- 135: Verarbeitungseinrichtung
- 140: Speichereinrichtung

- 145: Kommunikationseinrichtung
- 150: Verarbeitungseinrichtung
- 155: Speichereinrichtung
- 160: Identifikator

- 165: Kommunikationseinrichtung
- 170: Verarbeitungseinrichtung
- 175: Speichereinrichtung
- 180: Identifikator

- 185: Kommunikationsprofil
- 200: Verfahren
- 205: Kommunikationsprofil aktivieren
- 210: Identifikator K++ erzeugen
- 215: Mitteilen: Aktivierung K
- 220: Kommunikationsprofil verwenden
- 225: Empfangen Deaktivierungsanforderung zu Aktivierung N
- 230: N=K?
- 235: Kommunikationsprofil deaktivieren

- 250: Empfangen Benachrichtigung Aktivierung K
- 255: bereits Aktivierung N≠K aktiv?
- 260: Deaktivierungsanforderung zu Aktivierung N übermitteln

## Patentansprüche

1. Verfahren (200) zum Steuern eines mobilen Endgeräts (105, 110), wobei das Verfahren (200) folgende Schritte umfasst:
- Aktivieren (205) eines Kommunikationsprofils (185) des mobilen Endgeräts (105, 110) durch das mobile Endgerät (105, 110);
- Übermitteln (215) einer Benachrichtigung über die Aktivierung durch das mobile Endgerät (105, 110) an eine externe Stelle (115);
- Hinterlegen (210) eines Identifikators (160) für die Aktivierung des Kommunikationsprofils (185);
- Empfangen (225) einer Deaktivierungsanforderung und eines Identifikators (160; 180) durch das mobile Endgerät (105, 110);
- Deaktivieren (235) des Kommunikationsprofils (185) durch das mobile Endgerät (105, 110), falls der empfangene Identifikator (160; 180) dem hinterlegten Identifikator (160) entspricht.

2. Verfahren (200) nach Anspruch 1, wobei der Identifikator (160) seitens des mobilen Endgeräts (105, 110) bestimmt wird, von dem mobilen Endgerät (105, 110) an die externe Stelle (115) übermittelt und dort hinterlegt wird.

3. Verfahren (200) nach Anspruch 1, wobei der Identifikator (160) seitens der externen Stelle (115) bestimmt und an das mobile Endgerät (105, 110) übermittelt wird und dort hinterlegt wird.

4. Verfahren (200) nach einem der vorangehenden Ansprüche, wobei die Benachrichtigung eine Identifikation des mobilen Endgeräts (105, 110) umfasst.

5. Verfahren (200) nach einem der vorangehenden Ansprüche, wobei das mobile Endgerät (105, 110) bei initiativem Deaktivieren des Kommunikationsprofils eine Deaktivierungsanforderung mit dem Identifikator (160) an die externe Stelle (115) übermittelt und die externe Stelle (115) dazu eingerichtet ist, den hinterlegten Identifikator (160) zu löschen.

6. Verfahren (200) nach einem der vorangehenden Ansprüche, wobei die externe Stelle (115) die folgenden Schritte ausführt:
- Empfangen (250) der Benachrichtigung des mobilen Endgeräts (105) über dessen Aktivierung des Kommunikationsprofils (185);
- Hinterlegen (250) des der Aktivierung zugeordneten Identifikators (160);
- Bestimmen (255), ob ein weiterer Identifikator (180) einer Aktivierung des gleichen Kommunikationsprofils (185) durch ein anderes mobiles Endgerät (110) vorliegt, und in diesem Fall:
- Versenden (260) der Deaktivierungsanforderung und des weiteren Identifikators (180) an das andere mobile Endgerät (110); und Löschen des versandten Identifikators (180).

7. Verfahren (200) nach einem der vorangehenden Ansprüche, wobei der Identifikator (160) derart bestimmt wird, dass von zwei Identifikatoren (160; 180) bestimmt werden kann, welcher zuerst und welcher erst danach erzeugt wurde.

8. Verfahren (200) nach einem der vorangehenden Ansprüche, wobei der Identifikator (160) einen Zeitstempel, der auf den Zeitpunkt der Aktivierung des Kommunikationsprofils (185) hinweist, oder eine laufende Nummer oder eine sonstige Information aus einer vorbestimmten Sequenz umfasst.

9. Mobiles Endgerät (105, 110), umfassend:
- eine Kommunikationseinrichtung (145, 165) zur Kommunikation mit einer externen Stelle (115);
- eine Speichereinrichtung (155, 175) zur Hinterlegung eines Identifikators (160); und
- eine Verarbeitungseinrichtung (150, 170), die dazu eingerichtet ist:
∘ ein Kommunikationsprofil (185) zu aktivieren;
∘ eine Benachrichtigung über die Aktivierung an eine externe Stelle (115) zu übermitteln;
∘ einen Identifikator (160) der Aktivierung zu hinterlegen;
∘ eine Deaktivierungsanforderung und einen Identifikator (160; 180) von der externen Stelle (115) zu empfangen; und
∘ das Kommunikationsprofil (185) zu deaktivieren, falls der empfangene Identifikator (160; 180) dem hinterlegten Identifikator (160) entspricht.

10. Kraftfahrzeug (120, 125), umfassend ein mobiles Endgerät (105, 110) nach Anspruch 9.

11. Externe Stelle (115), wobei die externe Stelle (115) folgendes umfasst:
- eine Kommunikationseinrichtung (130) zur Kommunikation mit mehreren mobilen Endgeräten;
- eine Speichereinrichtung (140) zur Hinterlegung von Identifikatoren (160, 180) eines oder mehrerer mobiler Endgeräte (105, 110); und
- eine Verarbeitungseinrichtung (135), die dazu eingerichtet ist,
∘ eine Benachrichtigung eines ersten mobilen Endgeräts (105) über eine Aktivierung eines Kommunikationsprofils (185) zu empfangen;
∘ einen Identifikator (160) der Aktivierung des Kommunikationsprofils (185) zu hinterlegen;
∘ zu bestimmen, ob ein weiterer Identifikator (180) einer Aktivierung des gleichen Kommunikationsprofils (185) durch ein zweites mobiles Endgerät (110) vorliegt, und in diesem Fall
∘ eine Deaktivierungsanforderung und den weiteren Identifikator (180) an das zweite mobile Endgerät (110) zu versenden und den versandten weiteren Identifikator (180) zu löschen,
**dadurch gekennzeichnet, dass**
die Verarbeitungseinrichtung (135) dazu eingerichtet ist, einen solchen weiteren Identifikator (180), der
- einen Zeitstempel, der auf den Zeitpunkt der Aktivierung des Kommunikationsprofils (185) durch das zweite mobile Endgerät (110) hinweist, oder
- eine laufende Nummer oder eine sonstige Information aus einer vorbestimmten Sequenz
umfasst,
zu hinterlegen, an das zweite mobile Endgerät (110) zu versenden und zu löschen.

## Claims

1. Method (200) for controlling a mobile terminal (105, 110), wherein the method (200) comprises the following steps:
- activating (205) a communication profile (185) of the mobile terminal (105, 110) by the mobile terminal (105, 110);
- transmitting (215) a notification of the activation by the mobile terminal (105, 110) to an external entity (115);
- storing (210) an identifier (160) for the activation of the communication profile (185);
- receiving (225) a deactivation request and an identifier (160; 180) by the mobile terminal (105, 110);
- deactivating (235) the communication profile (185) by the mobile terminal (105, 110), if the received identifier (160; 180) corresponds to the stored identifier (160).

2. Method (200) according to claim 1, wherein the identifier (160) is determined by the mobile terminal (105, 110), is transmitted from the mobile terminal (105, 110) to the external entity (115) and is stored there.

3. Method (200) according to claim 1, wherein the identifier (160) is determined by the external entity (115) and is transmitted to the mobile terminal (105, 110) and is stored there.

4. Method (200) according to one of the preceding claims, wherein the notification comprises an identification of the mobile terminal (105, 110).

5. Method (200) according to one of the preceding claims, wherein the mobile terminal (105, 110), upon initiatively deactivating the communication profile, transmits a deactivation request with the identifier (160) to the external entity (115) and the external entity (115) is configured to delete the stored identifier (160).

6. Method (200) according to one of the preceding claims, wherein the external entity (115) performs the following steps:
- receiving (250) the notification of the mobile terminal (105) of its activation of the communication profile (185);
- storing (250) the identifier (160) associated with the activation;
- determining (255) whether a further identifier (180) of an activation of the same communication profile (185) by another mobile terminal (110) is present, and in this case:
- sending (260) the deactivation request and the further identifier (180) to the other mobile terminal (110); and deleting the sent identifier (180).

7. Method (200) according to one of the preceding claims, wherein the identifier (160) is determined in such a way that it can be determined from two identifiers (160; 180) which was generated first and which was generated thereafter.

8. Method (200) according to one of the preceding claims, wherein the identifier (160) comprises a timestamp indicating the time of the activation of the communication profile (185), or a sequential number or other information from a predetermined sequence.

9. Mobile terminal (105, 110), comprising:
- a communication device (145, 165) for communication with an external entity (115);
- a storage device (155, 175) for storing an identifier (160); and
- a processing device (150, 170), which is configured to:
- activate a communication profile (185);
- transmit a notification of the activation to an external entity (115);
- store an identifier (160) of the activation;
- receive a deactivation request and an identifier (160; 180) from the external entity (115); and
- deactivate the communication profile (185), if the received identifier (160; 180) corresponds to the stored identifier (160).

10. Motor vehicle (120, 125), comprising a mobile terminal (105, 110) according to claim 9.

11. External entity (115), wherein the external entity (115) comprises:
- a communication device (130) for communication with multiple mobile terminals;
- a storage device (140) for storing identifiers (160, 180) of one or more mobile terminals (105, 110); and
- **a processing** device (135), which is configured to:
∘ receive a notification of a first mobile terminal (105) of an activation of a communication profile (185);
∘ store an identifier (160) of the activation of the communication profile (185);
∘ determine whether a further identifier (180) of an activation of the same communication profile (185) by a second mobile terminal (110) is present, and in this case
∘ send a deactivation request and the further identifier (180) to the second mobile terminal (110) and delete the sent further identifier (180), **characterized in that**
∘ the processing device (135) is configured to store, send to the second mobile terminal (110) and delete such a further identifier (180), which comprises
- a timestamp indicating the time of the activation of the communication profile (185) by the second mobile terminal (110), or
- a sequential number or other information from a predetermined sequence.

## Revendications

1. Procédé (200) pour commander un terminal mobile (105, 110), le procédé (200) comprenant les étapes suivantes :
- activer (205) un profil de communication (185) du terminal mobile (105, 110) par le terminal mobile (105, 110) ;
- transmettre (215) une notification de l'activation par le terminal mobile (105, 110) à une entité externe (115) ;
- stocker (210) un identificateur (160) pour l'activation du profil de communication (185) ;
- recevoir (225) une demande de désactivation et un identificateur (160 ; 180) par le terminal mobile (105, 110) ;
- désactiver (235) le profil de communication (185) par le terminal mobile (105, 110) si l'identificateur reçu (160 ; 180) correspond à l'identificateur stocké (160).

2. Le procédé (200) selon la revendication 1, dans lequel l'identificateur (160) est déterminé par le terminal mobile (105, 110), est transmis du terminal mobile (105, 110) à l'entité externe (115) et y est stocké.

3. Le procédé (200) selon la revendication 1, dans lequel l'identificateur (160) est déterminé par l'entité externe (115) et est transmis au terminal mobile (105, 110) et y est stocké.

4. Le procédé (200) selon l'une quelconque des revendications précédentes, dans lequel la notification comprend une identification du terminal mobile (105, 110).

5. Le procédé (200) selon l'une quelconque des revendications précédentes, dans lequel le terminal mobile (105, 110), lors de la désactivation initiative du profil de communication, transmet une demande de désactivation avec l'identificateur (160) à l'entité externe (115) et l'entité externe (115) est configurée pour supprimer l'identificateur stocké (160).

6. Le procédé (200) selon l'une quelconque des revendications précédentes, dans lequel l'entité externe (115) exécute les étapes suivantes :
- recevoir (250) la notification du terminal mobile (105) de son activation du profil de communication (185) ;
- stocker (250) l'identificateur (160) associé à l'activation ;
- déterminer (255) si un autre identificateur (180) d'une activation du même profil de communication (185) par un autre terminal mobile (110) est présent, et dans ce cas :
- envoyer (260) la demande de désactivation et l'autre identificateur (180) à l'autre terminal mobile (110) ; et supprimer l'identificateur envoyé (180).

7. Le procédé (200) selon l'une quelconque des revendications précédentes, dans lequel l'identificateur (160) est déterminé de telle sorte qu'il peut être déterminé à partir de deux identificateurs (160 ; 180) lequel a été généré en premier et lequel a été généré seulement ensuite.

8. Le procédé (200) selon l'une quelconque des revendications précédentes, dans lequel l'identificateur (160) comprend un horodatage indiquant le moment de l'activation du profil de communication (185), ou un numéro séquentiel ou une autre information provenant d'une séquence prédéterminée.

9. Terminal mobile (105, 110), comprenant :
- un dispositif de communication (145, 165) pour la communication avec une entité externe (115) ;
- un dispositif de mémorisation (155, 175) pour stocker un identificateur (160) ; et
- un dispositif de traitement (150, 170) configuré pour :
∘ activer un profil de communication (185) ;
∘ transmettre une notification de l'activation à une entité externe (115) ;
∘ stocker un identificateur (160) de l'activation ;
∘ recevoir une demande de désactivation et un identificateur (160 ; 180) de l'entité externe (115) ; et
∘ désactiver le profil de communication (185) si l'identificateur reçu (160 ; 180) correspond à l'identificateur stocké (160).

10. Véhicule automobile (120, 125), comprenant un terminal mobile (105, 110) selon la revendication 9.

11. Entité externe (115), l'entité externe (115) comprenant :
- un dispositif de communication (130) pour la communication avec une pluralité de terminaux mobiles ;
- un dispositif de mémorisation (140) pour stocker des identificateurs (160, 180) d'un ou plusieurs terminaux mobiles (105, 110) ; et
- un dispositif de traitement (135) configuré pour :
∘ recevoir une notification d'un premier terminal mobile (105) d'une activation d'un profil de communication (185) ;
∘ stocker un identificateur (160) de l'activation du profil de communication (185) ;
∘ déterminer si un autre identificateur (180) d'une activation du même profil de communication (185) par un deuxième terminal mobile (110) est présent, et dans ce cas
∘ envoyer une demande de désactivation et l'autre identificateur (180) au deuxième terminal mobile (110) et supprimer l'autre identificateur envoyé (180),
**caractérisée en ce que**
le dispositif de traitement (135) est configuré pour stocker, envoyer au deuxième terminal mobile (110) et supprimer un tel autre identificateur (180) qui comprend:
- un horodatage indiquant le moment de l'activation du profil de communication (185) par le deuxième terminal mobile (110), ou
- un numéro séquentiel ou une autre information provenant d'une séquence prédéterminée.
